Europäisches Patentamt

European Patent Office

Office européen des brevets

(11) Publication number: **0 028 882**
**A1**

(12) **EUROPEAN PATENT APPLICATION**

(21) Application number: **80303485.9**

(22) Date of filing: **03.10.80**

(51) Int. Cl.³: **H 02 J 13/00**
**H 01 R 13/66, H 01 H 85/02**

(30) Priority: **20.10.79 GB 7936492**

(43) Date of publication of application:
**20.05.81 Bulletin 81/20**

(84) Designated Contracting States:
**BE DE FR IT NL SE**

(71) Applicant: **SWISH PRODUCTS LIMITED**
**Lichfield Road Industrial Estate**
**Tamworth Staffordshire(GB)**

(72) Inventor: **Simpson, Kenneth**
**14 Horseshoe Drive Etchinghill**
**Rugeley Staffordhire(GB)**

(74) Representative: **Collingwood,Anthony Robert et al,**
**SHAW Bowker & Folkes Whitehall Chambers 23**
**Colmore Row**
**Birmingham B3 2BL(GB)**

(54) An electronic time based control system.

(57) An electronic time based control system for, for example, a domestic household, comprises a master unit 10 which is connected to a number of slave units 40 via the electrical mains circuit of the household. The slave units 40 are interposed between the main circuit and various domestic appliances whereby operation of the appliances is governed by control information generated by the master unit which, in turn, is programmable by the user so that the control signals for different appliances can be produced at pre-settable times. In their simplest form, each slave unit may comprise circuitry for detecting and unscrambling control information intended for that slave unit and a power switching element such as a triac for regulating electrical power supply to the associated appliance. Such a slave unit may be housed within the electrical plug for connecting the appliance to the mains circuit thereby obviating the need for a separate housing for each such slave unit. The control information will be superimposed on the mains supply wave form and to avoid interference between separate systems operating on the same general mains supply network, the fuse connection between the general network and the household mains circuit may incorporate a filter for preventing control signals produced by the master unit from passing into the general supply network.

Fig. 1

1.

DESCRIPTION

AN ELECTRONIC TIME BASED CONTROL SYSTEM

This invention relates to mains power supply systems wherein the mains circuit, in addition to conducting low frequency (e.g. 50 Hertz) electrical power to appliances connected to the circuit, is used for the transmission of relatively high frequency control signals superimposed on the power supply waveform for controlling receiving units associated with the appliances. Such signals are generated by a controller and are used to control switching on and off and/or regulating the supply of power to the appliances.

It it well known to provide domestic heating appliances such as central heating boilers, electric ovens and electrical storage heaters with control devices which are pre-settable so that the appliance is switched on or off at preselected times. For example in the case of electrical storage heaters, the usual practice is to connect these to a separate circuit controlled by a separate electrical meter which incorporates a timer so that the heaters are only switched on during low tariff periods. Such control systems are very inflexible in that they are limited to one type of appliance and provide no facility for automatically switching on different appliances at different times.

The present invention has particular application to a more flexible electronic time based control system comprising: a signal transmitting unit comprising microprocessor controlled circuitry including timing means, a display device connected to said circuitry to display information handled thereby and a user operable device for entry of instructions into said unit to programme the same to generate control signals at preselected times, said circuitry being arranged to code and direct output information into the electrical mains circuit via means for connecting said unit to the mains circuit whereby differently coded control signals can be transmitted by the mains circuit; and a number of receiving units each having means for connecting the same to the mains circuit so as to draw electrical mains current and also receive said control signals and each being connectable to a power consuming appliance, said receiving unit being responsive to respective coded control signals from the transmitting unit and being operable to control supply of power to the associated appliance according to the information transmitted thereto by the transmitting unit.

Thus, such a system can be used to control a variety of domestic appliances independently of one another. The control function may simply involve switching on or off the power supply to the appliance or it may involve regulating power supply to the appliance. Because the electrical mains circuit is used to transmit the control signals, the only electrical cables needed are those used to connect the transmitting unit to the mains circuit (through the intermediary of the respective receiving units). Such cables may be standard three conductor cables (live, neutral and earth conductors) as used in the United Kingdom or two conductor cables ( live and neutral) as used on the continent and the control signals may be transmitted via the live conductor for example.

The information transmitted via the mains circuit will be superimposed on the mains supply waveform and typically will be modulated onto a RF carrier frequency, the control signals intended for different receiving units being directed into different transmission channels so that each receiving unit responds only to information transmitted by the respective channel. With such a system it is desirable if not essential to prevent interference with other like systems in the locality because of the possibility of control signals generated in one system being transmitted through the general mains network to other systems connected to the general mains network.

According to one aspect of the present invention we provide in or for an electrical system of the kind comprising a general low frequency mains power supply network and a localised power supply circuit coupled to receive input power from said network via one or more fusible elements, a component for accommodating a fusible element and incorporating an electrical filter for preventing or attenuating the transmission between said network and said circuit of high frequency signals superimposed on the power supply waveform.

Preferably the component is in the form of a standard fuse box plug having a pair of contact blades between which a fuse wire can be connected together with the filter according to the invention.

4.

The electronic time based control system as described above eliminates the need for separate transmission cables for the control signals and by incorporating a filter into the standard fuse box plugs linking the localised main circuit and the general network, the need for separate filtering unit is obviated.

With a view to simplifying the above system still further, according to a second aspect of the invention we provide in or for an electrical system comprising a low frequency power mains supply circuit to which electrical appliances are connectible via plug and socket connectors, at least one plug connector incorporating within the housing thereof electronic circuitry responsive to a preselected high frequency control signal or signals superimposed on the power supply waveform and operable, in use, to vary the operational condition of an appliance connected to the mains circuit via the plug connector. Thus, the electrical cable of each appliance to be controlled may terminate in a two or three pin plug for connection to a standard mains supply socket and that plug will, in accordance with this aspect of the invention, also include electronic control circuitry as aforesaid.

These and various other features of the present invention will become apparent from the following description of a preferred embodiment which is illustrated in the accompanying drawings. In the drawings:

Figure 1 is a schematic control system for a typical household;

Figure 2 is a schematic diagram showing one form of master unit used in the control system;

5.

Figure 3 is a schematic diagram showing one form of slave unit used in the system;

Figure 4 is a schematic circuit diagram of a slave unit providing a power switching facility;

Figure 5 is a sectional view of an electrical plug connecting a domestic appliance to the main circuit, the plug also embodying the electrical circuitry of the receiving unit shown in Figure 4;

Figure 6 is a plan view of the plug shown in Figure 5;

Figure 7 is a schematic circuit diagram of the fuse connection between the household main circuit and the general supply network, the fuse connection including an inductive high frequency filter;

Figure 8 is a schematic sectional view of a fuse plug embodying the filter;

Figure 9 and 11 are circuit diagrams of alternative forms of filter associated with the fuse connection; and

Figures 10 and 12 are respective diagrammatic sectional views of a fuse plug embodying the alternative forms of filter shown in Figures 9 and 11 respectively.

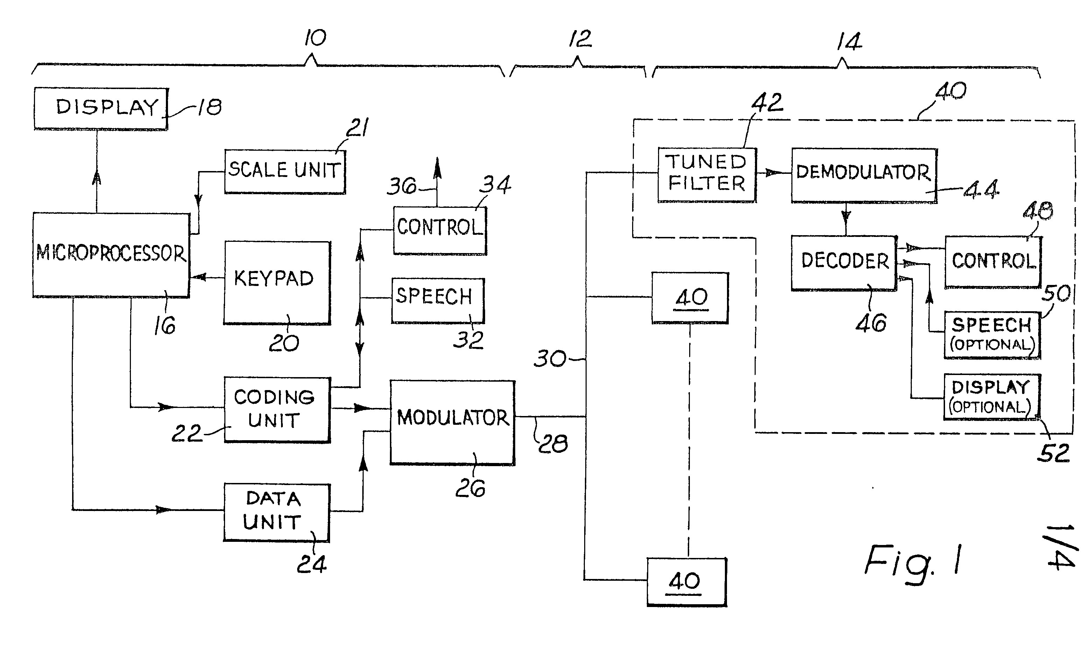

Referring now to the drawings and in particular Figure 1, the control system essentially comprises three sections, a master unit 10, the AC mains circuit 12 and a slave section 14 comprising a number of slave units connected to the master unit via the mains circuit 12. In practice, the master unit will be located at a suitable point in the household (for example the kitchen) and the various slave units will be distributed around the household in the vicinity of various domestic appliances which are to be controlled by the master unit. For example, the receiving units may be associated

6.

with various domestic appliances such as electric blankets in each of the bedrooms, electrical lighting and heating appliances in the rooms of the household etc.

The master unit includes: a microprocessor 16 acting as a central control device; a display device 18 controlled by the microprocessor; a key pad 20 which can be used to enter instructions into the microprocessor or optionally as a calculator in conjunction with the microprocessor and the display device 18; and an electrical weighing scale 21 for providing electrical outputs representing the weight of articles placed thereon. The microprocessor 16 directly controls a coding unit 22 (e.g. a multiplexing unit) to individually identify "slave" out stations and a data unit 24 to route time, control or speech information forward. The outputs of the coding unit 22 and data unit 24 are fed to a modulator 26 where the signals are translated to a radio frequency level for injection via connecting cable 28 into the AC mains circuit 30 which is used as a central "bus". The cable 28 may be a conventional two or three core cable for supplying mains power to the master unit 10. The master unit also includes a loudspeaker/microphone intercom device 32 and an appliance control device 34 which, via output 36, can be used to control any appliance in the immediate locality of the master unit.

The slave section 14 comprises a number of slave units 40 of which one is shown in detail in Figure 1. Each slave unit 40 comprises a tuned filter 42, demodulator 44 and decoder 46 for detecting and unscrambling signals intended for that particular slave unit. Means ((not shown) may be provided for presetting each slave unit to respond to a selected transmission channel, e.g. a multi-position switch whose different settings are identified
by numbers or other markings to enable the user
to ensure that each slave unit responds to a different
selected transmission channel.  For example, there
may be 20 channels and hence 20 switch switch positions
numbered 1 to 20 on each slave unit.  Thus, a slave
unit which has been set to respond to signals transmitted
by channel 5 for example can be addressed from
the master unit by keying in a code corresponding
to channel 5 at the keyboard 20.

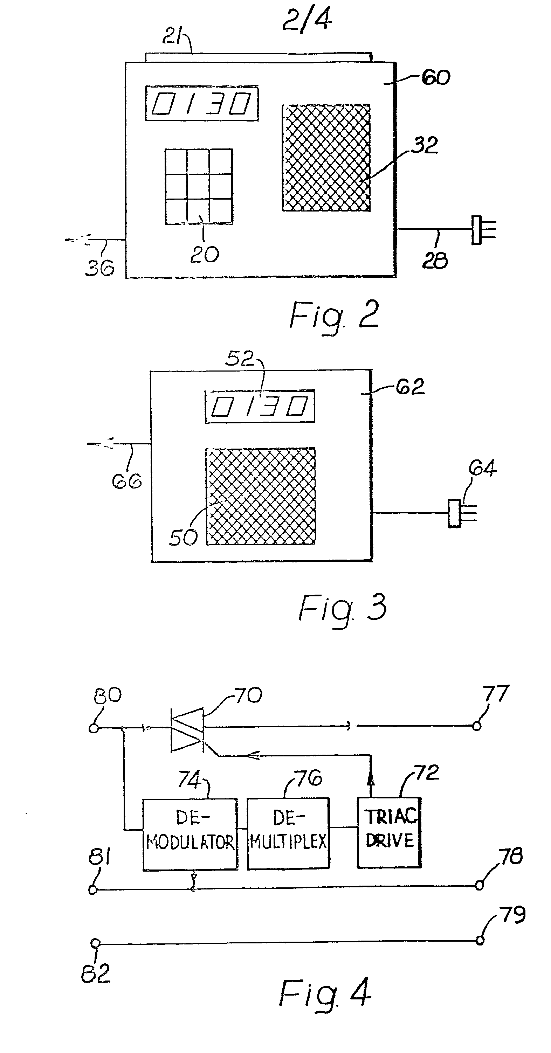

The master unit 10 is conveniently of the
form shown in Figure 2 in which all of the components
are housed within a casing 60, like reference numerals
in Figures 1 and 2 being used to identify the same
components.  The slave units 40 may be of different
types according to the number of facilities required
at a given slave outstation.

One form of slave unit 40 is shown in Figure
3 and comprises a casing 62 accommodating a display
device 52 and intercom device 50, the unit being
connected to the mains supply via a three pin plug
64 and being connected to the appliance to be controlled
via cable 66.  Where only a power switching or
regulation function is required at a given slave
outstation, the intercom and display devices may
be omitted and the unit may be made much more compact
and may, in this event, be embodied within the
housing of an electrical mains plug as described
hereinafter.

One function of the master unit 10 is to act
as a digital timer and a display of real time will
be produced on the display device 18 when this
is not required to display other information.
The timing function of the master unit enables

·8.

it to determine when particular slave outstations are to be provided with timing signals to change the operating conditions of the associated appliances. For example, the master unit may be programmed by the user, via the keyboard 20, to issue command signals (e.g. switch on, switch off signals) to selected outstations at preset times, such programmed information being stored in the microprocessor memory until updated by the user. In some circumstances, the user may wish to override the programmed timing of the master unit in order for example to switch on a particular appliance earlier than the programmed time. In this event, the user may enter a code via the keyboard to indicate that he wishes to assume temporary manual control and then key in an instruction to cause the appropriate slave unit to operate the appliance in question. Thereafter the master unit may revert automatically to its normal programme.

Another advantage of the timing function of the master unit is that the unit can be programmed to generate, via its own intercom speakers and/or via one of the slave speakers, an audible signal, for example to act as a time alarm signal to waken the occupants of the household at a preset time or times in the morning. Each bedroom of the household may be equipped with a slave unit and the master unit may be programmed to produce time alarm signals at different times so that each member of the household is wakened at his/her chosen time. The time alarm facility may, of course, be employed for other purposes.

Although the device 18 will normally display real time, it will conveniently switch to display other information when required or alternatively it may comprise two display sections, one for time display and one for display of other data. Entries made via the keyboard 20 will be displayed to enable the user to verify that the correct entry has been made and the master unit may, in response to entry of a suitable code via the keyboard, read out data, such as switch on or switch off time, stored for each slave unit to enable the user to check the programmed times and if desired update them according to requirements.

As mentioned previously, the keyboard may be used to perform calculations in conjunction with the microprocessor and display device 18. Thus, the master unit has an operating mode (calculator mode) in which it is placed in response to entry of a certain code via the keyboard. The keyboard may include keys for entering mathematical functions as well as keys for entering numerical or, if desired, alphanumerical data. The numbers entered and numbers computed while the master unit is operating in the calculator mode will be displayed by the device 18 in similar fashion to a conventional calculator.

When the weighing scale 21 is used, the master unit may automatically display the weight sensed on the device 18 or alternatively display of weight may be suppressed until a certain code has been entered via the keyboard 20.

The system also allows speech communication between the master unit and any slave units which incorporate an intercom device, the communication link being made by entering the appropriate address code for the slave unit concerned.

When a particular slave unit is required to perform a control function only, e.g. switching on or off of an electrical appliance and power regulation, it may be embodied in the housing of
the electrical plug used to connect the appliance
cable to an outlet socket of the mains circuit.
One example of such a slave unit is shown in Figures
4, 5 or 6. A slave unit in this instance may comprise
a power switching device such as a triac 70 for
connection to the live conductor of the mains supply,
an electronic drive circuit 72 controlling the
gating electrode of the triac, and de-modulating
and decoding (e.g. de-multiplexing) circuits 74
and 76 connected to receive the control information
transmitted along the main circuit for that slave
unit. Thus, the condition of the triac 70 can
be controlled according to the control information
supplied by the master unit. As shown in Figures
5 and 6, the triac 70 and circuits 72, 74, 76 are
all accommodated within a three pin plug which
may be of the 13 amp flat pin type having live,
neutral and earth pins 77, 78, 79 and cable connection
terminals 80, 81, 82. Thus, from the user's standpoint,
the plug would be fitted to the appliance cable
and plugged into the mains supply network in conventional
fashion.

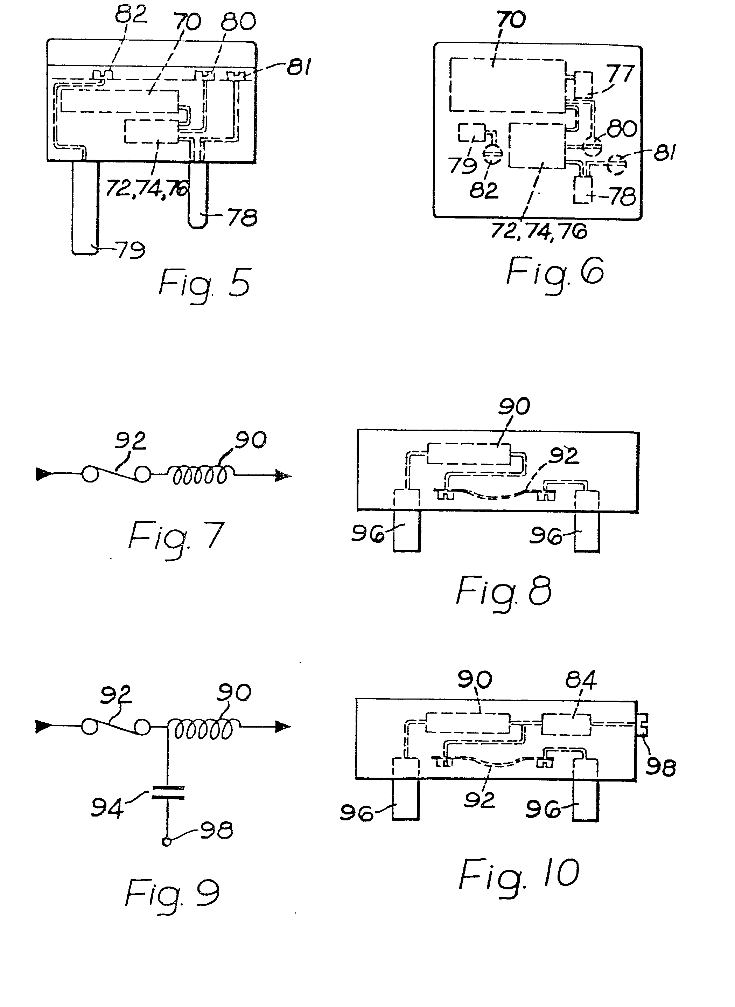

Referring now to Figures 7 to 10, in order
to prevent exchange of signals between separate
control systems in, for example, adjacent households,
means is provided to isolate the control system
installed at one location from other systems operating
on the same general mains supply network. This
is achieved by means of a filter network for attenuating
the RF frequencies used by the system and, in accordance
with the invention, a filter network is embodied
in one or more the circuit protective fuses of
the household supply system so that the signals
generated by the master unit cannot travel past
the fuse or fuses and into the general mains supply

11.

network. The filter may comprise a simple inductance 90 in series with the mains supply fuse 92 (Figure 7) or it may be necessary to decouple the inductor 90 to ground via a suitable capacitor 94 (Figure 9) connected between the live and neutral or earth conductors.

According to a feature of the invention, the filter is actually incorporated in the housing of the fuse plug at the supply entry point, i.e. the Electricity Board's fuse board. Thus, as shown in Figure 8, the inductor 90 is connected in series with the fuse wire 92 between the contact blades 96 of the fuse plug. Where a decoupling capacitor 94 is employed this can be connected to earth or neutral via terminal 98 (Figure 10).

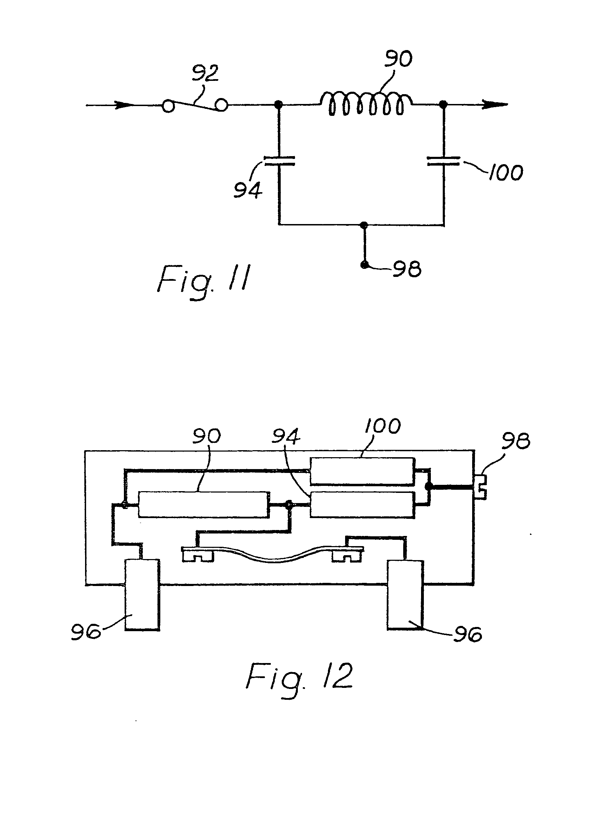

Figures 11 and 12 show a further alternative which serves to block control signals in both directions and differs from the embodiment of Figures 9 and 10 by the addition of a second capacitor 100.

Although as described above, the system includes a single master unit, it will be understood that the system may include more than one master unit if desired.

12.

CLAIMS

1.    In or for an electrical system of the kind
comprising a general low frequency mains supply
network and a localised power supply circuit coupled
to receive input power from said circuit via one
or more fusible elements, a component for accommodating
a fusible element and incorporating an electrical
filter for preventing or attenuating the transmission
between said network and said circuit of high frequency
signals superimposed on the power supply waveform.

2.    A system or component as claimed in claim
1 in which the component is provided with a pair
of contact blades for plug and socket connection
with open circuit terminals in a line between said
network and said circuit, said electrical filter
being connected to one of said blades and to an
intermediate terminal which is connectible to the
other blade via a fusible element.

3.    A system or component as claimed in claim
1 or claim 2 in which said filter prevents or attenuates
high frequency signal transmission from said network
into said circuit and vice versa.

4.    A system as claimed in any one of claims 1
to 3 in which said circuit has a number of terminal

13.

points to which power consuming appliances are connectible and in which means is provided for remotely controlling such appliances by means of high frequency control signals injected into and transmitted via said circuit.

5. In or for an electrical system comprising a low frequency power mains supply circuit to which electrical appliances are connectible via plug and socket connectors, at least one plug connector incorporating within the housing thereof electronic circuitry responsive to a preselected high frequency control signal or signals superimposed on the power supply waveform and operable, in use, to vary the operational condition of an appliance connected to the mains circuit via the plug connector.

6. A plug connector or system as claimed in claim 5 wherein said electronic circuitry includes a semi-conductor switch which controls the supply of electrical power from the mains circuit to the associated appliance.

7. A plug connector according to claim 6 in which said semiconductor switch comprises a triac.

8. A plug connector or system as claimed in claim 5, 6 or 7 in which said electronic circuitry includes a decoding section for distinguishing said preselected signal from other control signals intended for other like plug connectors.

9. A plug connector or system as claimed in any one of claims 5 to 8 including means for presetting the circuitry to respond to any one of a series of differently coded control signals.

10. A plug connector or system as claimed in any one of claims 5 to 9 in which the connector comprises

14.

at least two terminals, namely live and neutral terminals.

Fig. I

1/4

0028882

Fig. 2

Fig. 3

Fig. 4

Fig. 5

Fig. 6

Fig. 7

Fig. 8

Fig. 9

Fig. 10

Fig. 11

Fig. 12

## EUROPEAN SEARCH REPORT

European Patent Office

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | US - A - 3 964 048 (J. LUSK) <br><br> * Column 2, line 38 - line 66; figure 2 * <br><br> -- <br><br> FR - A - 1 017 840 (SOCIETE POUR L'ACHAT, LA VENTE ET L'EXPLOITATION DE BREVETS) <br><br> * Page 2, right-hand column, lines 29-46; page 4, right-hand column, lines 30-37; figures 1,3 * <br><br> -- <br><br> DE - A - 2 800 472 (PICO ELECTRO-NICS) <br><br> * Page 10, line 7 - page 14, line 24; page 15, line 20 - page 17, line 5; page 36, line 15 - page 37, line 13 ; figures 1,13,14 * <br><br> -- <br><br> US - A - 4 162 486 (L. WYLER) <br><br> * Column 7, line 9 - column 10, line 36; figures 3-7 * <br><br> ---- | 1,3 <br><br><br><br> 1 <br><br><br><br><br><br><br> 5-10 <br><br><br><br><br><br><br> 5-10 | H 02 J 13/00 <br> H 01 R 13/66 <br> H 01 H 85/02 <br><br><br><br><br> TECHNICAL FIELDS SEARCHED (Int. Cl.) <br><br> H 01 H <br> H 01 R <br> H 02 J <br> H 04 B <br><br><br><br> CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| The present search report has been drawn up for all claims | | |
|---|---|---|
| Place of search <br> The Hague | Date of completion of the search <br> 06-02-1981 | Examiner <br> V. HELOT |

EPO Form 1503.1 06.78